# EUROPEAN PATENT APPLICATION

(11) **EP 3 800 054 A1**
(43) Date of publication of application: **07.04.2021**
(21) Application number: 20196737.9
(22) Date of filing: 17.09.2020
(51) Int. Cl.: B41J 2/165, B41J 25/304, B41J 3/407, A61J 3/00, B41F 17/36, G07B 17/00, G01N 21/64

(54) **SOLUTION APPLICATION APPARATUS AND A TABLET PRINTING APPARATUS**

(30) Priority: 20.09.2019 JP 2019172144
(71) Applicant: Shibaura Mechatronics Corporation, Yokohama-shi Kanagawa (JP)
(72) Inventor: AOYAGI, Hitoshi, Sakae-ku, Yokohama-shi,, Kanagawa (JP); KUROIWA, Kyota, Sakae-ku, Yokohama-shi,, Kanagawa (JP)
(74) Representative: Kramer Barske Schmidtchen Patentanwälte PartG mbB

(57) **Abstract**

An excellent quality application and printing is performed to a printing target. In a solution application apparatus according to embodiments of the present disclosure, ink supplied to the head 51 ejecting the solution is a solution including fluorescent material, which emits light when light with wavelength in ultraviolet region is irradiated, and the solution application apparatus detects a presence of an ejection failure nozzle by imaging an ejection outlet 52a in a state in which light having wavelength in ultraviolet region is irradiated to the ejection outlet 52a of a nozzle 52 of the head 51.

## Description

### FIELD OF THE INVENTION

The embodiments of the present disclosure relate to a solution application apparatus and a tablet printing apparatus.

### BACKGROUND

A solution application apparatus is used in the printing to tablets, and the production of liquid crystal display device and semiconductor device. For example, a solution application apparatus includes an inkjet application head that ejects solution from a plurality of nozzles, and performs application by sequentially dropping droplets from the nozzles to tablets carried by the carrying mechanism.

In the solution application apparatus, ejection failures may occur due to various causes. For example, the dispense failures occur when bubbles or foreign bodies contaminated in the solution blocks the nozzles. In the solution application apparatus, when the tablets that are the application target are formed by compressing powder materials, surface of the tablets may be shaved in the carrying process of the tablets, and powder produced by this may block the nozzles.

When solution ejection failures occur, the solution would not be applied to the application target in a desired application amount. Accordingly, non-uniform film may be formed or printed letters may be unreadable, resulting in poor quality.

Therefore, to detect the ejection failures, there is an apparatus that ejects the solution from the nozzles of the application head, images each flying droplet by a camera, and detects the ejection failure based on the imaged images.

### Prior art documents

[Patent document] Japanese Laid-Open Publication: JP2014-019140

### SUMMARY OF THE INVENTION

### PROBLEM TO BE SOLVED BY THE INVENTION

However, the solution ejected from the nozzles may be effected by small wind pressure, etc., and the flying droplet may be curved. When the flying droplet is curved, the ejected droplet and a focus position of the camera is displaced, and a clear image cannot be obtained. If the clear image is not obtained, it would be difficult to accurately perform determination using the image and the determination errors occur.

The present disclosure provides a solution application apparatus and a tablet printing apparatus capable of performing the application and the printing in excellent quality.

### MEANS TO SOLVE THE PROBLEM

A solution application apparatus according to embodiments of the present disclosure applies a solution including a fluorescent material, which emits light when light with wavelength in ultraviolet region is irradiated, to a printing target during carrying, and the solution application apparatus includes: a printing head which has a plurality of nozzles and which ejects the solution from an ejection outlet of the nozzle; a light source which has a wavelength in the ultraviolet region and which irradiates light to a region including the ejection outlet; an imaging unit which images a region including at least one of the ejection outlets which is irradiated by the light from the light source in a state the solution is supplied to the printing head; a controlling device which judges a presence of scratches on the surface of the ejection outlet of the printing head from the image imaged by the imaging unit.

A solution application apparatus according to embodiments of the present disclosure applies a solution including a fluorescent material, which emits light when light with wavelength in ultraviolet region is irradiated, to a printing target during carrying, and the solution application apparatus includes: a printing head which has a plurality of nozzles and which ejects the solution from an ejection outlet of the nozzle; a light source which has a wavelength in the ultraviolet region and which irradiates light to a region including the ejection outlet; a wiping mechanism which wipes the printing head; an imaging unit which images a surface of the ejection outlet of the printing head after the printing head is wiped by the wiping mechanism; a controlling device which judges a presence of scratches on the surface of the ejection outlet of the printing head from the image imaged by the imaging unit.

A tablet printing apparatus according to embodiments of the present disclosure applies a solution including a fluorescent material, which emits light when light with wavelength in ultraviolet region is irradiated, to a tablet, and the tablet printing apparatus includes; a carrying unit which carries the tablet; and the solution application apparatus described above which applies the solution to the tablet.

### EFFECT OF INVENTION

The present disclosure provides a solution application apparatus and a tablet printing apparatus capable of performing the application and the printing in excellent quality.

### BRIEF DESCRIPTION OF THE DRAWINGS

Fig. 1 is a front view illustrating an entire structure of a tablet printing apparatus according to an embodiment.
Fig. 2 is a plan view illustrating an entire structure of a tablet printing apparatus according to an embodiment.
Fig. 3 is a structural diagram of a head cleaner and ejection failure detector according to an embodiment.
Fig. 4 is an operation state diagram of a head cleaner and ejection failure detector according to an embodiment.
Fig. 5 is an operation state diagram of a head cleaner and ejection failure detector according to an embodiment.
Fig. 6 is an operation state diagram of a head cleaner and ejection failure detector according to an embodiment.
Fig. 7 is an operation state diagram of a head cleaner and ejection failure detector according to an embodiment.
Fig. 8 is an operation state diagram of a head cleaner and ejection failure detector according to an embodiment.
Fig. 9 is an operation state diagram of a head cleaner and ejection failure detector according to an embodiment.
Fig. 10 is a flowchart illustrating a flow of a printing process performed by the tablet printing apparatus according to an embodiment.
Fig. 11 is an example of a bottom view of an application head after a wiping.

### DETAILED DESCRIPTION OF THE EMBODIMENTS

### (First Embodiment)

In below, a tablet printing apparatus is described as an example of embodiments of the present disclosure by using figures.

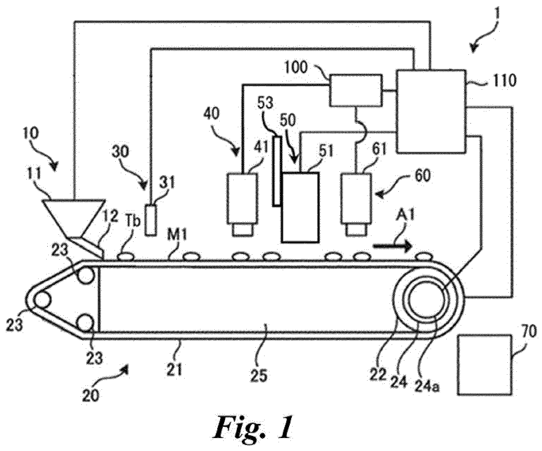

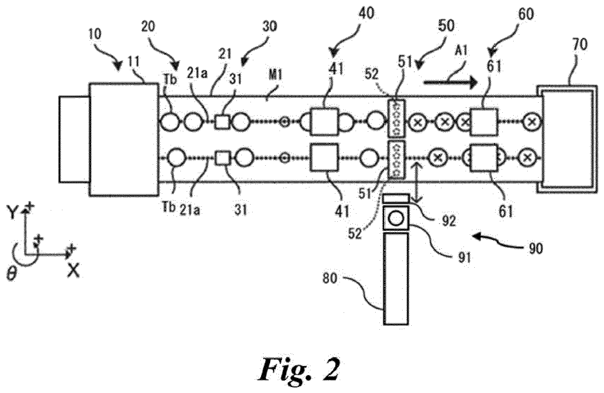

As illustrated in Figs. 1 and 2, a tablet printing apparatus 1 includes a supplying device 10, a carrying device 20, a detecting device 30, a first imaging device 40, a print device 50, a second imaging device 60, a collecting device 70, a head cleaning device 80, an ejection failure detecting device 90 and an image processing device 100, and a controlling device 110.

The supplying device 10 includes a hopper 11 and a shooter 12. The hopper 11 stores a large number of tablets Tb and sequentially supplies the tablets Tb. The shooter 12 aligns the supplied tablets Tb in a plurality of lines (in Fig. 2, two lines), and supplies the tablets Tb to the carrying device 20. The supplying device 10 is electrically connected to the controlling device 110, and the driving thereof is controlled by the controlling device 110.

The carrying device 20 includes a carrying belt 21, a drive pulley 22, a plurality of (In the example of Fig. 1, three) driven pulleys 23, a driving unit 24, and a suction chamber 25. The carrying belt 21 is an endless belt, and is stretched over the drive pulley 22 and each driven pulley 23. The drive pulley 22 and each driven pulley 23 are rotatably provided with an axis as a center, and the drive pulley 22 is connected to the driving unit 24. The driving unit 24 is, for example, a motor, is electrically connected to the controlling device 110, and the driving thereof is controlled by the controlling device 110. The driving unit 24 includes a position detector 24a such as a rotary encoder. The position detector 24a transmits a detection signal to the controlling device 110. The controlling device 110 may obtain information such as position, speed, and movement amount of the carrying belt 21a based on the detection signal. The carrying device 20 rotates the carrying belt 21a together with each driven pulley 23 by the rotation of the drive pulley 22 by the driving unit 24, and carries the tablet Tb on the carrying belt 21 in a direction of an arrow A1 (a carrying direction A1) in Figs. 1 and 2.

As illustrated in Fig. 2, here, a plurality of circular suction holes 21a are formed in a surface M1 of the carrying belt 21. These suction holes 21a are each a through-hole to adsorb the tablet Tb, and are arranged in two rows in parallel along the carrying direction A1 so as to form two carrying paths. Each suction hole 21a is connected to suction unit 25, and the suction force may be obtained by the suction unit 25. The suction unit 25 sucks the tablet Tb on the surface M1 of the carrying belt 21 via each suction hole 21a. The tablet Tb is placed on the surface M1 of the carrying belt 21 by the supplying device 10.

The detecting device 30 has a plurality of detecting units 31 (in the example of Fig. 2, two). The detecting units 31 are arranged on the downstream of the carrying direction A1 relative to the supplying device 10 and are arranged in a direction that intersects with the carrying direction A1 in a horizontal plane (for example, an orthogonal direction), and one detecting unit 31 is provided for each carrying path of the tablet Tb above the carrying belt 21. The detection unit 31 detects the tablet Tb on the carrying belt 21 by projecting and receiving laser light. Various laser sensors such as a reflection-type laser sensor may be used as the detecting unit 31. Furthermore, the beam shape of the laser light may be various types such as spot and line. Each detecting unit 31 is electrically connected to the controlling device 110, and transmits the detection signal to the controlling device 110.

The first imaging device 40 includes a plurality of imaging units 41 (in the example of Fig. 2, two), and works as the detection device that detects problems such as damages (for example, chipping) and dirt of the tablet Tb supplied on the carrying belt 21 and a position of the tablet Tb. The imaging units 41 are arranged on the downstream of the carrying direction A1 relative to the detecting device 30 and are arranged in a direction that intersects with the carrying direction A1 in a horizontal plane (for example, an orthogonal direction), and one imaging unit 31 is provided for each carrying path of the tablet Tb above the carrying belt 21. An imaging field of view of the imaging units 41 are set to be a size in which at least one tablet Tb carried by the carrying belt 21 can be imaged. The imaging units 41 performs imaging at the timing when the tablet Tb reaches directly below the imaging unit 41, acquires images including the upper surface of the tablet Tb, and transmits the acquired image (images for the tablet position detection) to the image processing device 100. The timing when the tablet Tb reaches directly below the imaging units 41 can be calculated by the aforementioned position detector 24a base on the detection of the tablet Tb by the detecting device 30. As the imaging units 41, various cameras having an image sensor such as CCD or CMOS may be used. Each imaging unit 41 is electrically connected to the controlling device 110 via the image processing device 100, and the drivings thereof are controlled by the controlling device 110. If necessary, lighting for imaging is also provided.

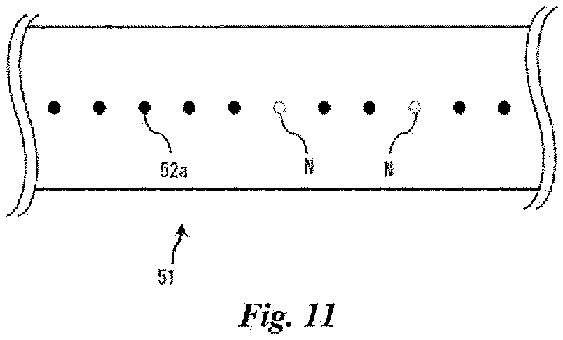

The printing device 50 has a printing head 51, and is positioned on the downstream side of the carrying direction A1 relative to the position where the first imaging device 40 is provided, above the carrying belt 21. The printing head 51 has a plurality of nozzles 52 and ejection outlets 52a (refer Fig. 11) thereof, and separately ejects ink from the ejection outlets 52a. The printing head 51 is provided so that an alignment direction in which the ejection outlets 52a of the nozzles 52 are aligned intersects with the carrying direction A1 in a horizontal plane (for example, orthogonal to each other). As the printing head 51, various inkjet printing heads having a driving element such as a piezoelectric element, a heating element, or a magnetostrictive element may be used. The printing head 51 can ascend and descend in a direction to be in contact with or apart from the carrying belt 21 by an elevator 53. The ascending and descending movement of the printing head 51 is performed at the time of maintenance of the printing head 51, which will be explained later. The printing device 50 is electrically connected to the controlling device 110, and the driving thereof is controlled by the controlling device 110.

The second imaging device 60 includes a plurality of imaging units 61 (in the example of Fig. 2, two), and works as the printing detection device that detects a print status of the tablet Tb that was printed. The imaging units 61 are arranged on the downstream of the carrying direction A1 relative to the printing device 50 and are arranged in a direction that intersects with the carrying direction A1 in a horizontal plane (for example, an orthogonal direction), and one imaging unit 61 is provided for each carrying path of the tablet Tb above the carrying belt 21. An imaging field of view of the imaging units 61 are set to be a size in which at least one tablet Tb carried by the carrying belt 21 can be imaged. The imaging units 61 performs imaging at the timing when the tablet Tb reaches directly below the imaging unit 61, acquires images including the upper surface of the tablet Tb, and transmits the acquired image (images for the print status inspection) to the image processing device 100. The timing when the tablet Tb reaches directly below the imaging units 61 can be calculated by the aforementioned position detector 24a base on the detection of the tablet Tb by the detecting device 30. As the imaging units 61, various cameras having an image sensor such as CCD or CMOS may be used. Each imaging unit 61 is electrically connected to the controlling device 110 via the image processing device 100, and the drivings thereof are controlled by the controlling device 110. If necessary, lighting for imaging is also provided.

The collecting device 70 is positioned on the downstream side of the carrying direction A1 relative to the position where the second imaging device 60 is provided, and is provided at the end of the downstream side of the carrying direction A1 in the carrying device 20. The collecting device 70 is configured to sequentially receive and collect the tablet Tb dropped when the tablet Tb is released from the holding of the carrying device 20. Note that the carrying device 20 releases the holding of the tablet Tb when each tablet Tb on the carrying belt 21 reaches the desired position, for example, the end of the downstream side in the carrying direction A1 in the carrying device 20.

In Fig. 2, when the carrying direction A1 is a X-direction and the direction orthogonal to the X-direction is a Y-direction, the head cleaning device 80 and the ejection failure detecting device 90 are provided in row so that the ejection failure detecting device 90 is closer to the carrying belt 21 than the head cleaning device 80 in the minus side (- side) of the Y-direction in the carrying belt 21. Then, on the extended line of the head cleaning device 80 and the ejection failure detecting device 90 aligned in row, one pair of the printing head 51 is positioned.

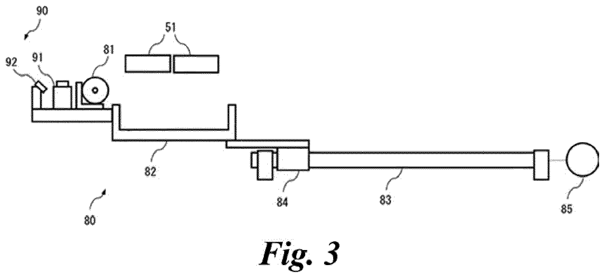

As illustrated in Fig. 3, the head cleaning device 80 includes a wiping mechanism 81, a liquid receiving unit 82, a ball screw 83, a slider 84, and a motor 85. The wiping mechanism 81 and the liquid receiving unit 82 are fixed to the slider 84, and can move to a standby position and a cleaning position when the motor 85 rotatory drives the ball screw 83. The cleaning position is a position between the upper surface of the carrying belt 21 and the lower surface of each printing head 51 ascended by the elevator 53.

As the wiping mechanism 81, a wiping mechanism such as a blade, a cloth, or a brush, or a vacuum wiping mechanism in which the said wiping mechanism is combined with a suction mechanism which sucks air may be used.

At the time of head maintenance, the head cleaning device 80 moves to the cleaning position, cleans the lower surface (nozzle surface) of each printing head 51 positioned above each of carrying paths, and removes powders and ink from the ejection outlet 52a and the surroundings thereof. The head cleaning device is electrically connected to the controlling device 110, and the driving thereof is controlled by the controlling device 110.

As illustrated in Fig. 3, the ejection failure detecting device 90 include an imaging unit 91 and a light source 92. The imaging unit 91 and the light source 92 are both integrated with the wiping device 81 and is fixed and supported by the slider 84. Therefore, the imaging unit 91 and the light source 92 are configured to move along with the movement of the wiping mechanism 81.

The imaging unit 91 images a region including the ejection outlet 52a of the nozzle 52 formed in the printing head 51 while passing through below the printing head 51, as described later. The imaging field of view of the imaging unit 91 may be in a size at least one ejection outlet 52a can get in, and may be a field of view that can image the ejection outlet 52a of all nozzles 52. The imaging unit 91 of the present embodiment can image a plurality of the ejection outlet 52a at once. The imaging unit 91 transmits the imaged image (images for the ejection failure detection) to the image processing device 100. As the imaging units 91, various cameras having an image sensor such as CCD or CMOS may be used. Each imaging unit 91 is electrically connected to the controlling device 110 via the image processing device 100, and the drivings thereof are controlled by the controlling device 110. The light source 92 is a lighting for imaging and irradiates light toward the lower surface (nozzle surface) of each printing head 51. The light source 92 is also controlled by the controlling device 110.

In the present embodiment, the solution supplied to the printing head 51 is an ink including a fluorescent material which is excited and emits light when the light with wavelength in the ultraviolet region is irradiated. In the printing to the tablet that involves the administration to the living body, ink which is edible and is used in the food additive may be used. For example, riboflavin (vitamin B2), acid red (referred to as Food Red No. 106), and cinchona extract may be used, and others including the fluorescent material which emits light when the light with wavelength in the ultraviolet region is irradiated may be used. The ink may not be a single material, and may be a mixture of a plurality of ink as long as it includes one or more fluorescent material and includes the fluorescent material in the level that can be detected as images by the imaging unit 91.

Meanwhile, as the light source 92, a light source that emits light having wavelength in ultraviolet region (wavelength region of 100 to 400 nm) may be used. Note that various light sources such as a black light, an UV lamp may be used as the light source 92 as long as it has the wavelength in ultraviolet region.

Returning to Fig. 1, the image processing device 100 takes in images for the tablet position detection imaged by the first imaging device 40, images for the print status inspection imaged by the second imaging device 60, and images for the ejection failure detection imaged by the ejection failure detecting device 90, and process the images by using the known image processing technology.

For example, the image processing device 100 processes the images for the tablet position detection imaged by the first imaging device 40, and detects the problem such as damages and dirt of the tablet Tb, and additionally, detects the position information of the tablet Tb in the X-direction (the carrying direction A1), in the Y-direction, and in the θ-direction (refer Fig. 2) . The positions in the X-direction and Y-direction is, for example, a position in the XY-coordinate system relative to the center of the field of view of the imaging unit 41. The position in the θ-direction is, for example, a position indicating the rotation level of the tablet Tb relative to the center line of the Y-direction of the field of view of the imaging unit 41. The position in the θ-direction is detected in the case the tablet Tb has a direction, such as a case the split line is provided to the tablet Tb and a case the tablet Tb is formed in ellipse, oval-shape, and quadrilateral.

Furthermore, the image processing device 100 processes the images for the print status inspection in the tablet Tb after the printing by the aforementioned printing device 50 is finished imaged by the second imaging device 60, and detects the printing position of the printing pattern (for example, letters and marks) printed on the tablet Tb (printing position information).

In addition, the image processing device 100 processes the images for the ejection failure detection obtained from the imaging unit 91 of the ejection failure detecting device 90, and detects the presence of the ejection outlet 52a, that is, whether the ejection outlet 52a is detected (recognized) as the image or not (ejection failure information). Note that although it is described that the presence of the ejection outlet 52a is detected, in the present embodiment, as described in detail later on, strictly speaking, the presence of the ink filled to the ejection outlet 52a of the nozzle 52 is detected (it is the same in below).

The detection of the presence of the ejection outlet 52a is performed as described as follows, for example. In the images for the ejection failure detection imaged by the imaging unit 91, region including at least one ejection outlet 52a is cut out, and the determination of whether the brightness (fluorescence amount or fluorescence intensity) of the region is equal to or more than the preset threshold is performed. For example, when the brightness is equal to or more than the threshold, it is determined that the ejection outlet 52a is detected, and when the brightness is less than the threshold, it is determined that the ejection outlet 52a is not detected.

As another example, the images acquired for the ejection failure detection imaged by the imaging unit 91 is binarized for each pixel using the threshold, and is classified into a black pixel which is equal to or more than the threshold and a white pixel which is less than the threshold. Then, from the binarized images, the total area of the black pixels which is the region including the ejection outlet 52a is calculated and if the total area is larger than the preset threshold, it is determined that the ejection outlet 52a is detected, and if the total area is smaller than the preset threshold, it is determined that the ejection outlet 52a is not detected. That is, the determination method used for the acquired images imaged by the imaging unit 91 is not limited.

The image processing device 100 transmits the failure information of each tablet Tb, the position information of each tablet Tb in the X-direction, Y-direction, and θ-direction, the printing position information of the printing pattern on each tablet Tb, and the ejection failure information of the printing head 51 to the controlling device 110. Note that when each information is transmitted by image processing device 100, the identification information of each imaging unit 41, 61, and 91 is added to said information. By this, the controlling device 110 can recognize which transmitted information is the information corresponding to each of the imaging unit 41, 61, and 91.

The controlling device 110 includes a microcomputer to intensively control each unit, and a storage unit that records the processing information and various programs (both not referred). The controlling device 110 controls the supplying device 10, the carrying device 20, the detecting device 30, the first imaging device 40, the printing device 50, the second imaging device 60, the head cleaning device 80, the ejection failure detecting device 90, and the image processing device 100. Furthermore, the controlling device 110 receives the detection signal, etc., transmitted from the detecting device 30 and the position detector 24a.

This controlling device 110 judges whether there are problems such as damages and dirt of the tablet Tb or not based on the failure information of the tablet Tb transmitted from the image processing device 100. This is performed by storing the correct tablet image in the controlling device 110 beforehand, and comparing the correct tablet image and the actual tablet image. When it is judged that there is a problem in the tablet Tb, the controlling device 110 prohibits the printing to said tablet Tb and collects said tablet Tb by a collection container (not illustrated) other than the collecting device 70. When it is judged that there is no problem in the tablet Tb, the controlling device 110 allows the printing to said tablet Tb.

In addition, the controlling device 110 sets the printing condition to the tablet Tb which the position in the X-direction, Y-direction, and θ-direction is detected based on the position information of the tablet Tb in the X-direction, Y-direction, and θ-direction transmitted from the image processing device 100. Note that the storage unit stores the printing data including the printing pattern, such as letters and signs, and the printing position of the printing pattern on the tablet Tb, and the moving speed data of the carrying belt 21. For example, the controlling device 110 decides the usage range of the nozzle used in that printing in the printing head 51 based on the position information of the tablet Tb in the Y-direction, and decides the timing to start the printing to the tablet Tb based on the position information of the tablet Tb in the X-direction. Moreover, the controlling device 110 sets the printing condition in accordance with the position of the tablet Tb in the θ-direction based on the position information of the tablet Tb in the θ-direction. As one example, 180 ways of printing data in which the direction of the printing pattern is rotated for each one degree from 0 degree to 179 degrees are registered in the storage unit of the controlling device 110, and among those printing data, the printing data with the angles that fit to the position detected in the θ-direction is selected to set the printing condition.

This controlling device 110 judges whether the printing pattern (for example, letters and signs) is normally printed on the tablet Tb based on the printing position information of the printed pattern on the tablet Tb transmitted from the image processing device 100. This is performed by storing the correct printing pattern in the controlling device 110 beforehand, and comparing the correct printing pattern and the actual printing pattern on the tablet Tb after the printing. When it is judged that the printing pattern is normally printed on the tablet Tb, the tablet Tb that has passed through the inspection is collected by the collecting device 70. When it is judged that the printing pattern is not normally printed on the tablet Tb, the tablet Tb that has not passed through the inspection is collected by collection container (not illustrated) other than the collecting device 70.

Moreover, the controlling device 110 judges the presence of the nozzle with ejection failure (ejection failed nozzle) based on the ejection failure information transmitted from the image processing device 100. In detail, in the ejection failure information transmitted from the image processing device 100, when the ejection outlet 52a of all nozzles 52 included in the printing head 51 is detected, the nozzle 51 in which the ink is not filled is judged as "not present". In contrast, in the printing head 51, when at least one nozzle 52 which the ejection outlet 52a was not detected was present, or when the predefined specific ejection outlet 52a or the ejection outlet 52a in the predefined specific region were not detected, the nozzle in which the ink is not filled, that is, the ejection failure nozzle is judged as "present". In this way, the judge (inspection) of whether the ejection failure nozzle is present or not may be performed for all nozzles in the printing head 51, or may be performed for only nozzles which would be used when performing the printing to the tablet Tb. The controlling device 110 instruct the head cleaning device 80 to perform cleaning when it is judged that the ejection failure nozzle is present.

### (Printing Process)

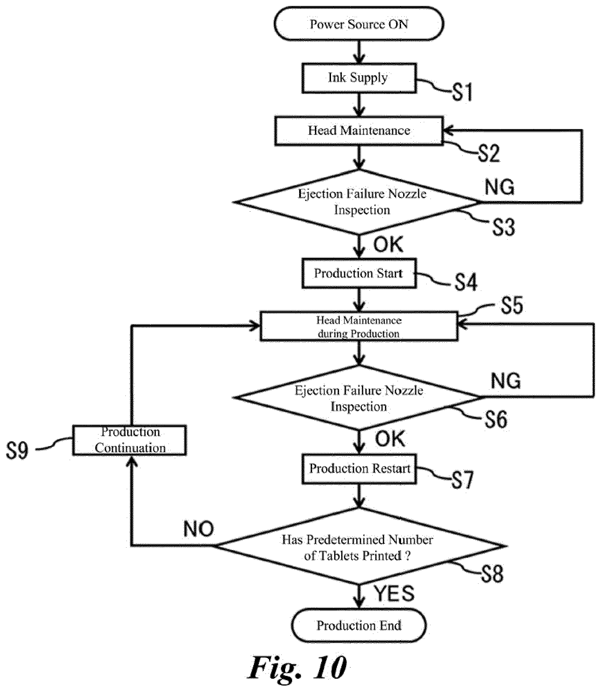

Next, the printing process (printing processing) performed by the tablet printing apparatus 1 will be described with the reference to the flowchart of Fig. 10 (and Fig. 1 as appropriate). Note that various information such as print data required for printing is stored in the storage unit of the controlling device 110 until the printing is performed, and a large number of the tablet Tb that are the printing target are put in the hopper 11 of the supply device 10.

As illustrated in Fig. 10, in step S1, when the power source of the tablet printing apparatus 1 is turned ON, the ink is supplied to the printing head 51.

In step S2, the printing head 51 is cleaned by the head cleaning device 80 as the head maintenance.

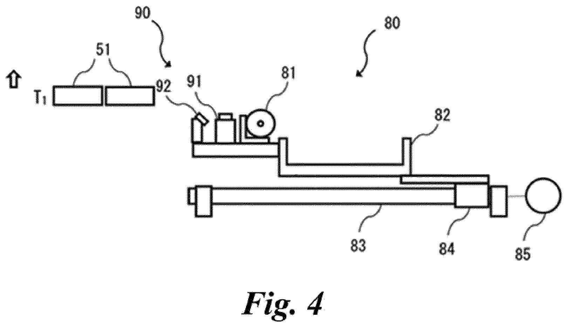

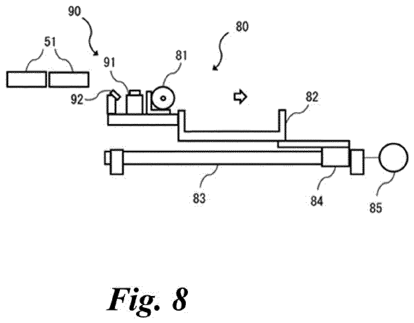

Here, the cleaning of the printing head is described using Figs. 4 to 9.

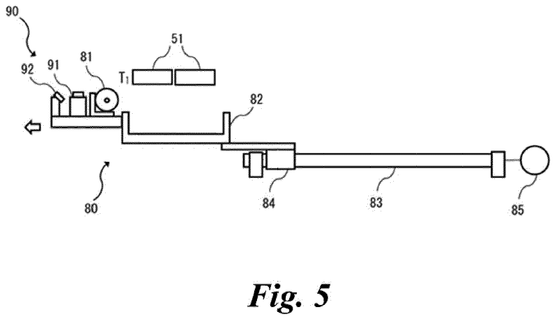

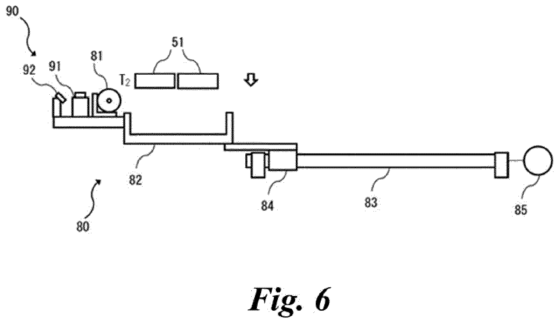

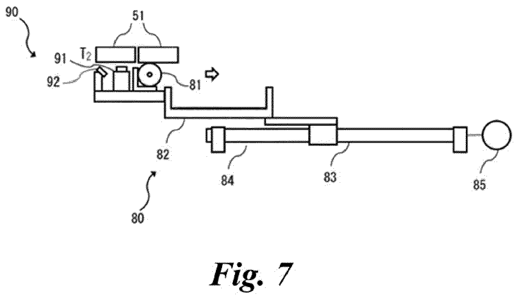

Firstly, as illustrated in Fig. 4, to start the cleaning of the printing head 51, the elevator 53 (refer Fig. 1) ascends the printing head 51 to the standby position T1. Next, in Fig. 5, the head cleaning device 80 moves to the left direction from the standby position together with the ejection failure detecting device 90 and moves to the cleaning position (cleaning start position). Note that the movement of the head cleaning device 80 etc., is driven by the motor 85 controlled by the controlling device 110. When the head cleaning device 80 is positioned at the cleaning start position, the liquid receiving unit 82 is positioned below the pair of the printing head 51. Next, as illustrated in Fig. 6, the elevator 53 descends the printing head 51 to the height level at which the printing head 51 contacts with the wiping mechanism 81 (maintenance position T2). Then, the ink is ejected toward the liquid receiving unit 82 from all nozzles 52 of the printing head 51 in the state the printing head is positioned at the maintenance position T2 (dummy ejection). By this way, powder adhered to the ejection outlet 52a of the nozzle 52 is removed with the ink and is accumulated in the liquid receiving unit 82. Note that the ink accumulated in the liquid receiving unit 82 is discharged via piping (not illustrated). As illustrated in Fig. 7, when the dummy ejection is finished, the wiping mechanism 81 is moved to the right direction to return to the standby position. While the wiping mechanism 81 is moving from the cleaning start position to the standby position, the ink is seeped from the nozzle 52 of the printing head and the powder adhered to the ejection outlet 52a and the surroundings thereof is wiped and removed together with the ink by the wiping mechanism 81 (wiping). In this way, the cleaning method of the printing head 51 by the head cleaning device 80 can be performed by combining, for example, the dummy ejection, the wiping, etc. Note that although it is desirable to clean the ejection outlet 52a and the surroundings thereof by both the dummy ejection and the wiping, either of the two may be performed.

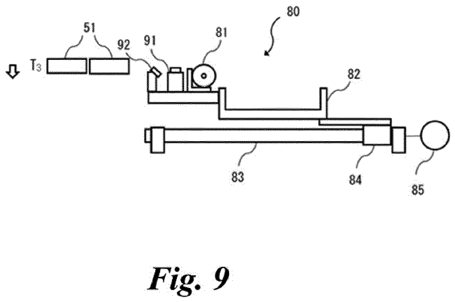

Note that as illustrated in Fig. 9, when the cleaning of the printing head is finished, the elevator 53 descends the printing head 52 to return to the printing position T3.

In step S3, the controlling device 110 judges whether the ejection failure nozzle is present in the nozzles of the printing head 51 or not based on the ejection failure information from the ejection failure detection device 90.

When the printing head 51 is wiped by the head cleaning device 80, the ejection failure detection device 90 follows and moves together with the head cleaning device 80 below the printing head 51. At this time, the imaging unit 91 follows the wiping operation of the wiping mechanism 81 and images the lower surface of the printing head 51. That is, the imaging unit 91 follows and moves together with the wiping mechanism 81 which is moving for the wiping, and during that time, light having wavelength in ultraviolet region is irradiated toward the lower surface (nozzle surface) of each printing head 51 from the light source 92, and while at this irradiation state, the imaging unit 91 images a plurality of images to image all ejection outlet or the ejection outlet that is the target of the ejection failure detection while scanning below the printing head 51, and transmits the obtained image to the image processing device 100 as the image for the ejection failure detection.

As describe above, ink used in the present embodiment is the ink including a fluorescent material which is excited and emits light when the light with wavelength in the ultraviolet region is irradiated. Meanwhile, light having wavelength in ultraviolet region (wavelength region of 100 to 400 nm) is emitted from the light source 92. Therefore, regarding the nozzle with excellent ejection (ejection excellent nozzle) in which the ink is filled to the ejection outlet 52a of the nozzle 52, since the brightness from the ink present in that ejection outlet 52a is the brightness that is in the level that can be sufficiently recognized by the image processing device 100, the presence of the ejection outlet 52a can be recognized via the ink present in the nozzle 52. In contrast, regarding the nozzle with ejection failure (ejection failure nozzle), since the ink is not filled to the ejection outlet 52a of the nozzle 52, fluorescent from the ink is not present or is little, and cannot be recognized by the image processing device 100. This point was comfirmed by the inventors.

Fig. 11 is an example of a bottom view of an application head after the wiping. In Fig. 11, the ejection outlet labeled N does not emit fluorescence and becomes dark. Note that in Fig. 11, the dark part is expressed white and the bright part is expressed black. Therefore, in the image imaged by the imaging unit 91, the fluorescence derived from the ink is imaged in the ejection excellent nozzle in which ink is filled in the nozzle as the ejection outlet 52a of Fig. 11. On the other hand, in the ejection failure nozzle in which the ink is not filled or the nozzle is blocked by the foreign body, the fluorescence is not imaged and would be missing at the part of the ejection outlet 52a of the nozzle as the ejection failure nozzle N indicated in Fig. 11. The image of the region including the ejection outlet 52a imaged by the imaging unit 91 is processed by the image processing device 100, and the ejection failure information of the nozzle is created. The step S3 is to judge the necessity of cleaning the printing head 51 by the controlling device 110. When it is judged that there is the ejection failure nozzle (NG), the step S2 is repeated again to clean the printing head 51.

In the step S3, when it is judged that there is no ejection failure nozzle (OK), in the step 4, the production is started, that is the printing to the tablet Tb is started. In detail, the tablet Tb is sequentially supplied on the carrying belt 21 from the supplying device 10 in the state the carrying belt 21 is rotated. The tablet Tb is carried in the predefined movement speed in two rows on the carrying belt 21, and the printing to the tablet Tb on the carrying belt 21 is started.

The tablet Tb on the carrying belt 21 is detected by the detection unit 31 for each carrying path of the tablet Tb, and the detection signal by the detection unit 31 is input to the controlling device 110 as a trigger signal. Then, the tablet Tb on the carrying belt 21 is imaged by the imaging unit 41 for each carrying path of the tablet Tb. At the timing based on the aforementioned trigger signal, that is, the timing when the tablet Tb reaches below the imaging unit 41, the upper surface of the tablet Tb is imaged by the imaging unit 41, and the imaged image is transmitted to the image processing device 100.

Then, the problem information of each tablet Tb is produced by the image processing device 100 based on the image for the pre-printing inspection transmitted from the imaging unit 41 and is transmitted to the controlling device 110. The presence of the problem of the tablet Tb is judged by the controlling device 110 based on the problem information of the tablet Tb. When it is judged that there is the problem in the tablet Tb, the controlling device 110 prohibits the printing to said tablet Tb. The position information of the tablet Tb (for example, position information of the tablet Tb in the X-direction, Y-direction, and θ-direction) are produced by the image processing device 100 based on the image for the tablet position detection transmitted from the imaging unit 41, and is transmitted to the controlling device 110. The printing condition for the tablet Tb is set by the controlling device 110 based on the position information of the tablet Tb.

Then, at the timing based on the aforementioned trigger signal, that is, the timing when the tablet Tb reaches below the printing head 51, the printing to the tablet Tb on the carrying belt by the printing device 50 is performed based on the aforementioned printing condition. In each printing head 51 of the printing device 50, the ink is appropriately ejected from each ejection outlet 52a, and the printing pattern such as letters and marks is printed on the upper surface of the tablet Tb.

The tablet Tb is inspected by the second imaging device 60. That is, the tablet Tb is imaged by the imaging unit 61 for each carrying path of the tablet Tb, and the imaged image is transmitted to the image processing device 100. The print position information is produced by the image processing unit 100 based on the image for the print status inspection transmitted from the imaging unit 61, and is transmitted to the controlling device 110. The quality judgment for the tablet Tb is judged by the controlling device 110 based on the inspection information of the printing pattern.

Then, the tablet Tb which the quality judgment for printing is completed is released from the held state by the carrying belt 21 when it is positioned at the end of the downstream side of the carrying belt 21. At this time, the tablet Tb which had no aforementioned problem and no problem on the printing position of the printing pattern is just dropped and collected by the collecting device 70, and the tablet Tb which had problem and the tablet which had failure in the printing position of the printing pattern, etc., is removed by the spraying of air during the carrying. Note the tablet Tb removed by the spraying of air is collected, for example, by the other collecting container (not illustrated) provided adjacent to the collecting device 70. Furthermore, when the tablet Tb which had problem and the tablet Tb which did not pass the inspection of the printing pattern frequently occurs (for example, when the tablet Tb with chippings and the tablet Tb which did not pass the inspection of the printing pattern are continuously detected 10 times), the controlling device 110 judges that the failure has occurred in the tablet printing device 1, stops the supplying of the new tablet Tb to the carrying belt 21, collects the tablet Tb currently present on the carrying belt 21, and stops the tablet printing apparatus 1. Note that, at this time, the tablet Tb remaining on the carrying belt 21 is collected by the other collecting container (not illustrated) provided adjacent to the collecting device 70. By this, the contamination of the unprinted tablet Tb into the collecting device 70 to which the qualified products are collected can be prevented. Note that among the collected tablet Tb, the tablet Tb which has not damages such as chipping and which is unprinted may be put in the tablet printing apparatus 1 again.

When certain time, for example 1 hour, elapses from the start of production, the printing head 50 is cleaned by the head cleaning device 80 as the inter-production head maintenance S5. That is, similarly to step S2, the printing head 51 and the ejection outlet 52a are cleaned by, for example, the dummy ejection, the wiping, etc.

In step S6, the presence detection of the ejection failure nozzles using the ejection failure detection device 90 is performed. The process of step S6 is performed similarly to step S3, and the presence of the ejection failure nozzles is judged. When it is judged that there is the ejection failure (NG), the step returns again to step S5, and the printing head 50 is cleaned by the head cleaning device 80.

In step S6, when it is judged that there is no ejection failure (OK), the production is restarted (step S7). The process of production is the same as step S4.

In step S8, when it is judged that all of the preset numbers of the tablet are printed (YES), the production is finished. On the other hand, when the printed tablets do not reach the designated numbers (NO), the production is continued in step S9. Afterward, steps S5 to S9 are repeated until all tablets are printed.

Here, as for the aforementioned tablets, tablets used for medicine, food and drink, cleaning, industry, or fragrance may be included. Furthermore, as the tablets, bare tablets (uncoated tablets), sugar-coated tablets, film-coated tablets, enteric-coated tablets, gelatin encapsulated tablets, multilayered tablets, and dry coated tablets may be included, and various capsules such as hard capsules and soft capsules are included in the tablets. In addition, as the shapes of tablets, various shapes such as discs, lenses, triangles, and ellipses may be used. Moreover, when the printing target tablets are for medicine and food and drink, the ink used is preferably edible ink. As this edible ink, synthetic colorant ink, natural colorant ink, dye ink, and pigment ink may be used.

The tablet printing apparatus is described above as an example of present embodiments. According to the present embodiment, by supplying the ink including the fluorescent material to the solution applying apparatus, the light with high brightness is emitted from the ejection excellent nozzle (having no problem on ejection) which is filled with ink via the ink by the irradiation from the light source having the wavelength in ultraviolet region. On the other hand, the ejection failure nozzle emits the light with low brightness or does not emit light even when the light is irradiated from the light source having wavelength in ultraviolet region. Therefore, high contrast occurs between the ejection excellent nozzle and the ejection failure nozzle so that the ejection failure nozzle can be detected with high sensitivity, and the ejection failure of the application head can be accurately determined. By using the fluorescent light, the images of the nozzle (ejection outlet) that could not be detected by the natural light can be obtained extremely clearly via the ink.

Furthermore, in the present embodiment, since not the dropping ink ejected from the nozzle but the region including the ejection outlet of the printing head is imaged, the focus position would not be displaced by the drop curve, and the information of the ejection failure nozzle can be more accurately obtained.

In addition, in the present embodiment, the ejection failure nozzle can be detected without ejecting the ink, so that the waste of the ink can be suppressed.

### (Second Embodiment)

Next, the second embodiment will be described. The inner structure of the present embodiment is the same as the above first embodiment and Figs. 1 and 2. The present embodiment detects scratches produced on the surface where the ejection outlet 52a of the printing head 51 is formed (lower surface) .

In the tablet printing apparatus, the tablet may stand up or the tablets may overlap with each other when the tablet is supplied to the carrying belt. When the tablet in this abnormal posture is carried to the printing device as it is, the tablet may hit or be rubbed with the lower surface of the printing head 51. At this time, the printing head 51 may be scratched. When the lower surface of the printing head 51, especially a region near the ejection outlet 52a is scratched, the ejection direction of the ink is disordered, and the correct printing pattern would not be printed.

When the surface to which the ejection outlet 52a of the printing head 51 is formed is scratched, the ink is seeped out from each ejection outlet 52a of the printing head 51, and the ink gets into the scratch when powder adhered to the ejection outlet 52a and the surroundings thereof is wiped and removed together with the ink by the wiping mechanism 81 (wiping). Since this ink is the aforementioned fluorescent ink, when the light source 92 irradiates light, the scratch on the printing head 51 would be clearly detected.

The imaging unit 91 images the surface to which the ejection outlet 52a of the printing head 51 is formed which is irradiated by the light source 92, and transmits the imaged image (images for scratch detection) to the image processing device 100. The image processing device 100 creates the scratch determination information related to the presence of scratch based on the images for scratch detection, and transmits the information to the controlling device 110. When it is judged that there is a scratch, the controlling device 110, changes the nozzle used for the tablet printing among the plurality of nozzles. Otherwise, urges the operator to change the printing head 51 itself.

The scratch determination information which indicates the presence of the scratch can be obtained, for example, as described below. In the images for the scratch detection imaged by the imaging unit 91, region including at least one ejection outlet 52a is cut out, and the determination of whether the brightness (fluorescence amount or fluorescence intensity) of the region is equal to or more than each of the plurality of preset threshold is performed. It is assumed that the cut out images includes the image A in which the ejection outlet and the scratch cam be detected together, the image B in which only the scratch can be detected, the image C in which only the ejection outlet can be detected, and the image D in which both the ejection outlet and the scratch are not detected. Accordingly, when the brightness of the image exceeds the threshold a, the image is image A, when the brightness of the image is between the threshold a and the threshold b (<a), the image is image B, when the brightness of the image is between the threshold b and the threshold c (<b), the image is image C, and when the brightness of the image lower than the threshold c, the image is image D. The image C corresponds to the ejection excellent nozzle. Furthermore, although the image A is the ejection excellent nozzle, since there is the scratch on the printing head 51, it is preferable to change the printing head 51 or change the nozzle used for the tablet printing among the plurality of nozzles as described above.

According to the second embodiment, by detecting the scratched produced on the printing head via the fluorescence from the ink in the same method as the detection of the ejection excellent nozzle in the first embodiment, the disorder in the ink ejection direction can be prevented and the tablet with printing failure can be reduced. Furthermore, the detection of the scratch can be performed together with the detection of the aforementioned ejection failure nozzle.

In addition, the detection of the scratch can be performed alone or may be performed together with the judgment of whether the ejection failure nozzle is present or not in step S3.

Moreover, although each embodiment of the present disclosure is described as an example which is applied to the tablet printing device, the printing target is not limited as long as the apparatus is in inkjet scheme. As long as it is the inkjet scheme apparatus, for example, the apparatus may be implemented in the liquid crystal display apparatus or the semiconductor production apparatus. In such cases, the filled ink is not limited to the edible ink, and inks including various fluorescent materials may be used as long as it emits visible light by the irradiation of light having wavelength in ultraviolet region.

Furthermore, in step S3 in Fig. 10, the image for the ejection failure detection using the ejection failure detection device 90 at the wiping operation by the head cleaning device 80 is also obtained. However, the imaging unit 91 may obtain the image of the lower surface of the printing head 51 by positioning the printing head 51 at the standby position T1 after the wiping operation is finished to be the state in Fig. 5 again, and moving the ejection failure detection device 90 in the right direction while maintaining the printing head 51 at the standby position T1. Furthermore, the head cleaning device 80 and the ejection failure detection device 90 may be configured to move separately.

Although some embodiments of the present disclosure are described in above, these embodiments are only presented as examples and are not intended to limit the scope of the invention. These novel embodiments may be implemented by other various forms, and various omissions, replacements, and modifications can be made without departing from the abstract of the invention. These embodiments and modifications thereof are included in the scope of the invention and the abstract thereof, and included in the invention described in the scope of claims and the equivalent thereto.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### REFERENCE SIGNS

- 1:: tablet printing device
- 10:: supplying device
- 20:: carrying device
- 21:: carrying belt
- 30:: detecting device
- 40:: first imaging device
- 50:: printing device
- 51:: printing head
- 52:: nozzle
- 52a:: ejection outlet
- 53:: elevator
- 60:: second imaging device
- 70:: collecting device
- 80:: head cleaning device
- 81:: wiping mechanism
- 82:: liquid receiving unit
- 83:: ball screw
- 84:: slider
- 85:: motor
- 90:: ejection failure detecting device
- 91:: imaging unit
- 92:: light source
- 100:: image processing device
- 110:: controlling device
- Tb:: tablet
- A1:: arrow (carrying direction)
- M1:: surface
- N:: failure nozzle

## Claims

1. A solution application apparatus that applies a solution including a fluorescent material, which emits light when light with wavelength in ultraviolet region is irradiated, to a printing target (Tb) during carrying, the solution application apparatus comprising:
a printing head (51) which has a plurality of nozzles (52) and which ejects the solution from an ejection outlet (52a) of the nozzle (52);
a light source (92) which has a wavelength in the ultraviolet region and which irradiates light to a region including the ejection outlet (52a);
an imaging unit (91) which images a region including at least one of the ejection outlets (52a) which is irradiated by the light from the light source (92) in a state the solution is supplied to the printing head (51); and
a controlling device (110) which judges a presence of an ejection failure nozzle (N) based on the image imaged and obtained by the imaging unit (91).

2. The solution application apparatus according to claim 1, comprising:
a wiping mechanism (81) which wipes the printing head (51),
wherein the imaging unit (91) is fixed and provided integrally to the wiping mechanism (81).

3. The solution application apparatus according to claim 2, wherein the wiping mechanism (81) moves in the direction orthogonal to the a carrying direction (A1) of the printing target (Tb).

4. The solution application apparatus according to claim 3, wherein the imaging unit (91) is provided at a printing head (51) side than the wiping mechanism (81) side when the wiping mechanism (81) is at a standby position where the wiping mechanism (81) is not performing wiping.

5. The solution application apparatus according to any one of claims 2 to 4, wherein the imaging unit (91) images the ejection outlet (52a) while following the wiping by the wiping mechanism (81).

6. The solution application apparatus according to any one of claims 2 to 5, wherein the controlling device (110) controls the wiping mechanism (81) to perform wiping when it is judged that there is the ejection failure nozzle (N).

7. The solution application apparatus according to any one of claims 1 to 6, wherein the controlling device (110) further detects a presence of a scratch on a surface to which the ejection outlet (52a) of the printing head (51) is formed based on the image.

8. A tablet printing apparatus (1) that applies a solution including a fluorescent material, which emits light when light with wavelength in ultraviolet region is irradiated, to a tablet (Tb), the tablet printing apparatus (1) comprising:
a carrying device (20) which carries the tablet (Tb); and
the solution application apparatus which applies the solution to the tablet (Tb) which is carried by the carrying device (20) according to any one of claims 1 to 7.
